# EUROPÄISCHE PATENTSCHRIFT

(11) **EP 3 216 583 B1**
(45) Veröffentlichungstag und Bekanntmachung des Hinweises auf die Patenterteilung: **28.04.2021**
(21) Anmeldenummer: 16159939.4
(22) Anmeldetag: 11.03.2016
(51) Int. Cl.: B29C 48/255, B29C 48/305, B29C 48/21, B29C 48/08, B29C 48/31, B29C 48/92, B32B 27/08, B29C 48/07, B29C 48/49

(54) **KOEXTRUSIONSADAPTER**
COEXTRUSION ADAPTER
ADAPTATEUR DE COEXTRUSION

(43) Veröffentlichungstag der Anmeldung: 13.09.2017
(73) Patentinhaber: Reifenhäuser GmbH & Co. KG Maschinenfabrik, 53844 Troisdorf (DE)
(72) Erfinder: KAUN, Achim, 53819 Neunkirchen (DE); BERGHEIM, Lars, 53859 Niederkassel (DE)
(74) Vertreter: Wagner Albiger & Partner Patentanwälte mbB

(56) Entgegenhaltungen:
- EP-A1- 0 315 304
- EP-A1- 2 862 693
- EP-A1- 2 949 448
- DE-U1-202004 011 742
- JP-A- 2014 162 186

## Beschreibung

Die Erfindung betrifft einen Koextrusionsadapter, z.B. für eine Extrusionsanlage mit mehreren Extrudern und einem von diesen gespeisten Werkzeug zur Herstellung eines Koextrusionsverbundes aus thermoplastischem Kunststoff. Ein solcher Koextrusionsadapter umfasst einen Zentralkanal mit einem einlassseitigen Ende für den Anschluss eines Extruders und einem auslassseitigen Ende für den Anschluss des Werkzeuges sowie die Höhe des Zentralkanals begrenzende Boden- und Deckenwandungen und die Breite des Zentralkanals begrenzende Seitenwandungen. Ferner umfasst der Koextrusionsadapter mindestens einen Koextrusionskanal mit Einlassende und Auslassende, wobei an das Einlassende jeweils ein weiterer Extruder anschließbar ist und das Auslassende stromabwärts des einlassseitigen Endes des Zentralkanals in diesen einmündet und jedem Auslassende des mindestens einen Koextrusionskanals zugeordnet Verstellvorrichtungen vorgesehen sind, die aus einer Mehrzahl von Verstellelementen bestehen, welche sich gemeinsam über die Breite des Auslassendes erstrecken und mittels Stellantrieben unabhängig voneinander in der Weise verstellbar sind, dass die lichte Weite des jeweiligen Breitenabschnittes des Auslassendes veränderbar ist.

Derartige Koextrusionsadapter werden für die Zusammenführung von aus mehreren Extrudern stammenden Schmelzesträngen aus thermoplastischem Kunststoff etwa bei der Herstellung von Folien, Platten und Tafeln verwendet. Hierbei werden die einzelnen von den Extrudern bereitgestellten Schmelzen thermoplastischer Kunststoffe im Koextrusionsadapter in der gewünschten Schichtenlage aufeinander geführt und nachfolgend gemeinsam dem Extrusionswerkzeug zur Herstellung des Koextrusionsverbundes zugeführt.

Bei der Aufeinanderschichtung von unterschiedlichen Kunststoffen innerhalb des Koextrusionsadapters, wie es in der Praxis häufiger Anwendungsfall ist, müssen unterschiedliche Eigenschaften der Kunststoffe, insbesondere unterschiedliche Viskositäten oder auch Abweichungen der gewählten Massendurchsatzverhältnisse der einzelnen Extruder ausgeglichen werden.

Ein solcher Koextrusionsadapter ist aus der EP 1 621 320 A1 bekannt.

Bei der Herstellung mehrschichtiger Folien mit einem derartigen Koextrusionsadapter werden die aufeinander geführten Schichten aus einem dem Koextrusionsadapter nachgeschalteten Werkzeug, häufig einer Breitschlitzdüse, zu der mehrschichtigen Folie extrudiert, wobei idealerweise alle Schichten mit gleichmäßiger gewünschter Schichtdicke über die gesamte Breite des Werkzeuges austreten. In der Praxis kommt es jedoch in den Randbereichen u.a. durch Viskositätsunterschiede und Reibungsverluste zu Schwankungen der Schichtdicke und der erhaltenen Folienqualität, so dass Randtreifen einer Breite von ca. 30 bis 50mm nicht für das Endprodukt geeignet sind und abgeschnitten sowie vorzugsweise direkt der Extrusion wieder zugeführt werden. Je nach Rohstoff der einzelnen Schichten ist dies jedoch nachteilig, da die Wiederverarbeitbarkeit beeinträchtigt und/oder der eingesetzte Rohstoff sehr kostenintensiv sein kann.

Es ist daher bereits verschiedentlich vorgeschlagen worden, den abzuschneidenden Randbereich nur aus preiswerteren, leicht wiederverwertbaren Kunststoffen auszubilden, so dass der eigentlich gewünschte Mehrschichtverbund eingekapselt wird und erst nach dem Randbeschnitt in der gewünschten Konfiguration erhalten wird.

So ist es aus der US 5 120 484 A bekannt, den Randbereich einer Breitschlitzdüse aus einem separaten Schmelzekanal mit angeschlossenem Extruder für ein Randpolymer zu speisen, so dass zwischen den Randbereichen der Mehrschichtverbund ungestört extrudiert werden kann und nach Abtrennen der Randbereiche zu Verfügung steht. Dies ist sehr aufwändig und unflexibel, insbesondere können nur konstante Breiten der Randstreifen und des gesamten Extrudats hergestellt werden.

Aus der US 4 784 815 sowie der US 4 289 560 sind Koextrusionsadapter bekannt, bei denen der im Zentralkanal strömende Schmelzestrom mit separat zugeführten Schmelzeströmen für die Randbereiche vor dem Eintritt in das nachgeschaltete Werkzeug vereinigt wird, wobei die zugeführten Schmelzeströme für die Randbereiche den im Zentralkanal strömenden Schmelzestrom vom Rand zurückdrängt. Derartige Anordnungen funktionieren jedoch nur bei symmetrischen Verbunden zufriedenstellend, sofern alle eingesetzten Rohstoffe aller Schichten ähnliche Viskositäten aufweisen. Weisen diese hingegen unterschiedliche Viskositäten oder Temperaturen auf oder ist der gewünschte Schichtenverbund unsymmetrisch, kommt es häufig zu Schichtgrenzenverschiebungen im Randbereich und der mehrschichtige Schmelzestrom im Zentralkanal lässt sich nicht aus dem Randbereich verdrängen, was verbesserungswürdig erscheint.

Schließlich beschreibt die EP 0 315 304 A1 einen Koextrusionsadapter, bei dem zwischen dem Zentralkanal und einem Koextrusionskanal verstellbare Trennelemente angeordnet sind, die eine geringere Breite als der Zentralkanal aufweisen und auch der Koextrusionskanal wird auf eine entsprechend geringere Breite als der Zentralkanal begrenzt. Auf diese Weise können symmetrische Verbunde mit einer randseitigen Einkapselung hergestellt werden, die aus dem zuvor im Zentralkanal geführten Schmelzestrom gebildet wird. Die Flexibilität hinsichtlich der selektiven Verdrängung einzelner oder mehrerer Schichten des herzustellenden mehrschichtigen Koextrusionsverbundes erscheint jedoch nach wie vor verbesserungswürdig.

Die Erfindung hat sich die Aufgabe gestellt, einen Koextrusionsadapter dahingehend weiterzubilden, dass unabhängig von der im Koextrusionsadapter aufeinander gelegten Schichtenabfolge und -anzahl auf einfache und flexible Weise einzelne oder mehrere Schichten zuverlässig aus dem Randbereich verdrängt werden können und beim Randbeschnitt ausgespart werden, um die Wiederverwertbarkeit der abgeschnittenen Ränder und die Wirtschaftlichkeit der Herstellung zu steigern.

Zur Lösung der gestellten Aufgabe wird erfindungsgemäß die Ausbildung eines Koextrusionsadapters gemäß den Merkmalen des Patentanspruches 1 vorgeschlagen.

Vorteilhafte Ausgestaltungen und Weiterbildungen der Erfindung sind Gegenstand der Unteransprüche.

Die erfindungsgemäße Lösung besteht darin, benachbart zum Auslassende des jeweiligen Koextrusionskanals in mindestens einer der Seitenwandungen des Zentralkanales eine Aufnahmebohrung anzuordnen, in die ein über die Seitenwandung in den Zentralkanal vorstehendes Verdrängerelement oder ein mit der Seitenwandung bündig abschließendes Verschlusselement eingesetzt ist.

Erfindungsgemäß ist es somit möglich, gezielt eine oder mehrere Schichten des im Zentralkanal strömenden Extrudats mittels des hineinragenden Verdrängerelements von den in Breitenrichtung liegenden Seitenwänden zu verdrängen und den entstehenden Freiraum durch die zugeführte Schmelze aus dem Koextrusionskanal zusätzlich zur Ausbildung der entsprechend gewünschten Koextrusionsschicht aufzufüllen. Auch ist es möglich, bei nicht gewünschter Verdrängung der Schmelze aus dem Zentralkanal an einem Auslassende eines Koextrusionskanals ein Verschlusselement in die benachbart zum Auslassende vorgesehene Aufnahmebohrung einzusetzen, welche anstelle eines Verdrängerbolzens die Aufnahmebohrung lediglich verschließt, aber nicht in den Zentralkanal vorsteht, sondern bündig in der Seitenwand abschließt.

Insoweit ist es möglich, unabhängig von der Positionierung einer oder mehrerer im Randbereich unerwünschter Schichten diese selektiv aus dem Randbereich zu verdrängen. Bei den unerwünschten Schichten kann es sich z.B. um schwierig wiederzuverwertende Haftvermittlerschichten oder um sehr kostenintensive Rohstoffe, wie EVOH handeln.

In einer bevorzugten Ausführungsform der Erfindung ist das Verdrängerelement als Verdrängerbolzen von beispielsweise zylindrische Grundform in eine entsprechende zylindrische Aufnahmebohrung eingesetzt und weist an seinem dem Zentralkanal zugewandten Ende eine in den Zentralkanal um ein geeignetes Maß vorstehende Verdrängernase auf, die die Schmelze im Zentralkanal randseitig verdrängt.

Als geeignetes Maß für den Überstand der Verdrängernase in den Zentralkanal wird ein Bereich von etwa 1 bis 10 mm angesehen, vorzugsweise etwa 2 bis 4 mm. Bei einer Breite des Zentralkanals von etwa 100 mm und einer Düsenbreite der nachgeschalteten Breitschlitzdüse von 2.000 mm resultiert dies in einer Randstreifenbildung mit selektiv verdrängten Schichten von etwa 30 bis 50 mm Breite. Durch den angegebenen Bereich von etwa 1 bis 10 mm für den Überstand der Verdrängernase können geeignete Breiten der Randstreifen bei Düsenbreiten von etwa 500 bis 5.000 mm erreicht werden.

Darüber hinaus ist die Aufnahmebohrung bevorzugt so ausgebildet, dass sie die Seitenwandung als Durchgangsbohrung durchsetzt und das Verdrängerelement ist von außen und abdichtend in diese Durchgangsbohrung einsetzbar. Auf diese Weise können beispielsweise unterschiedlich große Verdrängerbereiche oder -positionierungen je nach Schichtenfolge bei einem Anlagenstillstand im Zuge eines Produktwechsels durch entsprechenden Austausch der Verdrängerbolzen mit unterschiedlich weit vorstehender Verdrängernase ohne aufwändige Demontage oder Reinigung des kompletten Koextrusionsadapters eingestellt werden.

Weiterhin ist es bevorzugt vorgesehen, dass beide Seitenwandungen des Zentralkanals jeweils benachbart zum Auslassende der Koextrusionskanäle mit einander fluchtenden Aufnahmebohrungen ausgebildet sind, so dass auch entsprechend beide in Breitenrichtung liegenden Randbereiche in der bereits geschilderten Weise selektiv bearbeitet werden und die entsprechende Schmelze randseitig verdrängt wird.

Die Verstellelemente können an ihrem dem Auslassende des Koextrusionskanals zugewandten Ende einen keilförmigen Justierabschnitt aufweisen, dessen eine Keilfläche dem Zentralkanal und dessen andere Keilfläche dem jeweiligen Auslassende des Koextrusionskanals zugewandt ist, um die Dicke der zugeführten Koextrusionsschicht regeln zu können, wie es aus der EP 1 621 320 A1 bekannt ist. Erfindungsgemäß wir dazu vorgeschlagen, dass die dem Zentralkanal zugewandte Keilfläche in diesem Falle an dem vorstehenden Verdrängerelement bzw. dessen Verdrängernase anlegbar ist, wodurch die selektive Verdrängung der im Zentralkanal strömenden Schicht weiter verbessert wird.

Die Erfindung wird nachfolgend in weiteren Einzelheiten anhand von Ausführungsbeispielen in der Zeichnung erläutert. Es zeigen:
- Figur 1: in schematisierter Darstellung das Funktionsprinzip eines erfindungsgemäßen Koextrusionsadapters,
- Figur 2: die Einzelheit X gemäß Figur 1 in vergrößerter Darstellung,
- Figur 3: eine Prinzipskizze des erfindungsgemäßen Koextrusionsadapters im vertikalen Schnitt,
- Figur 4: einen Schnitt durch den erfindungsgemäßen Koextrusionsadapter entlang der Linien V-V in Figur 3,
- Figur 5: in perspektivischer Darstellung eine Ausführungsform des erfindungsgemäßen Koextrusionsadapters,
- Figur 6: die Aufsicht auf den erfindungsgemäßen Koextrusionsadapter gemäß Figur 5,
Figur 7 einen durch den Zentralkanal des erfindungsgemäßen Koextrusionsadapters nach Figur 5 verlaufenden Schnitt,
Figur 8 einen Teilschnitt durch den Koextrusionsadapter gemäß Figur 5 in einer gegenüber Figur 7 um 90° gedrehten Orientierung
Figur 9 einen schematischen Schnitt durch einen Koextrusionsverbund nach dem Stand der Technik
Figur 10 einen weiteren schematischen Schnitt durch einen Koextrusionsverbund nach dem Stand der Technik
Figur 11 einen schematischen Schnitt durch einen Koextrusionsverbund nach der Erfindung

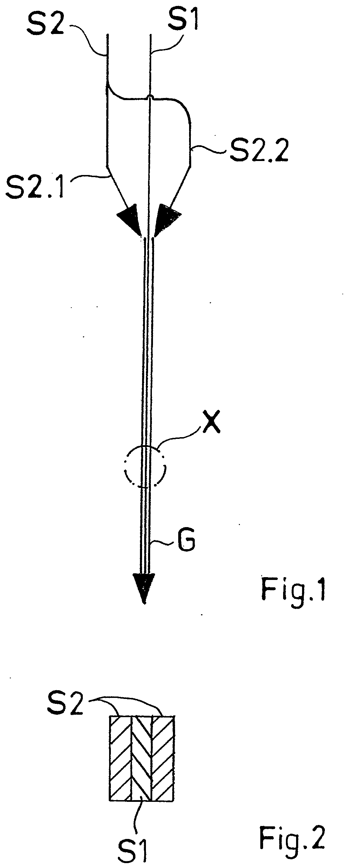

In der Figur 1 ist das Funktionsprinzip eines Koextrusionsadapters zur Herstellung eines mehrschichtigen Koextrusionsverbundes aus thermoplastischem Kunststoff dargestellt. Aus zwei unterschiedlichen und hier nicht dargestellten Extrudern werden unterschiedliche Schmelzeströme S1, S2 aus gleichen oder unterschiedlichen thermoplastischen Kunststoffen hergestellt und unter hohem Druck einem Koextrusionsadapter zugeführt. Hierbei wird der Schmelzestrom S1 im Wesentlichen geradlinig ohne Umlenkung durch einen nachfolgend näher erläuterten Zentralkanal des Koextrusionsadapters hindurch in Richtung auf ein Werkzeug geführt.

Im Gegensatz dazu wird der Schmelzestrom S2 in zwei Teilströme S2.1 und S2.2 aufgeteilt und über Koextrusionskanäle beidseits dem im Zentralkanal strömenden Strom S1 zugeführt und unter Ausbildung eines dreischichtigen aus der Figur 2 ersichtlichen Verbundes aufeinander geschichtet, wobei die Schmelzeströme S2 die Außenschichten und der Schmelzestrom S1 die Innenschicht des solchermaßen gebildeten Gesamtstromes G bilden, der nachfolgend dem nicht dargestellten Werkzeug, etwa einer Breitschlitzdüse zur Herstellung einer mehrschichtigen Folie, zugeführt wird. Wegen möglicher rheologischer Unterschiede in den einzelnen Kunststoffen der Schmelzestränge S1, S2 und/oder unterschiedlichen Massendurchsätzen muss dem Moment der Zusammenführung der Schmelzestränge S1, S2 bzw. S2.1 und S2.2 große Aufmerksamkeit gewidmet werden.

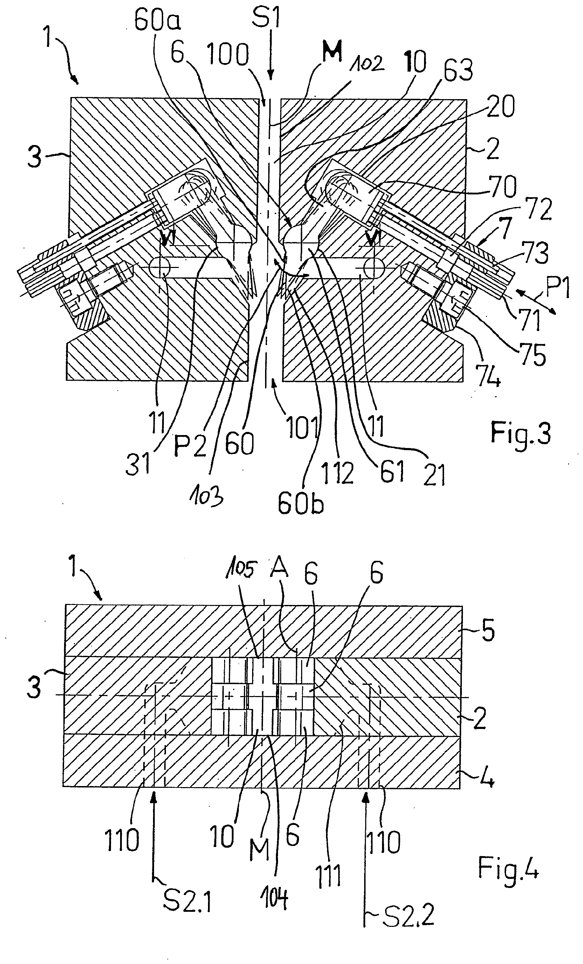

Die Figuren 3 und 4 zeigen ein Ausführungsbeispiel eines vorangehend im Prinzip beschriebenen Koextrusionsadapters 1, der zwei voneinander unter Ausbildung des Zentralkanals 10 beabstandete Kanalteile 2, 3 umfasst, in denen jeweils ein Koextrusionskanal 11 ausgebildet ist. Die Kanalteile 2, 3 sind spiegelsymmetrisch zur Mittelachse des Zentralkanals 10 ausgebildet und begrenzen diesen in Höhenrichtung unter Ausbildung einer Bodenwandung 102 und einer entsprechenden Deckenwandung 103.

Beide Kanalteile 2, 3 werden mittels Seitenplatten 4, 5 verbunden, die gleichzeitig auch die in Breitenrichtung des Zentralkanals 10 liegenden Seitenwände 104, 105 desselben bilden. Insoweit weist der Zentralkanal einen von Bodenwand 102, Deckenwand 103 und des Seitenwänden 104, 105 begrenzten rechteckigen Querschnitt auf.

Aufgrund einer vorhandenen Achsensymmetrie zur Mittelachse M können weitere Einzelheiten nunmehr anhand eines Kanalteiles und der darin angeordneten weiteren Bauteile erläutert werden, sie gelten entsprechend auch für das spiegelsymmetrisch ausgebildete weitere Kanalteil.

Entsprechend der Erläuterungen zu Figur 1 tritt der von einem ersten Extruder herangeführte Schmelzestrom S1 in den Zentralkanal 10 an einem einlassseitigen Ende 100 ein und strömt zunächst allein durch diesen Zentralkanal 10 bis zu dem Bereich, in welchem die beiden Koextrusionskanäle 11 in den Seitenteilen 2, 3 mit ihren jeweiligen Auslassenden 112 in den Zentralkanal 10 einmünden. Die zuvor mittels eines hier nicht dargestellten Aufteilungselementes aufgeteilten Teilströme S2.1 und S2.2 des Schmelzestromes S2 gelangen über beispielsweise im Seitenteil 4 eingebrachte Einlassenden 110 zunächst in einen Verteilbereich 111, in welchem sie auf die gesamte Breite des Auslassendes 112 verbreitert werden und treten sodann über die gesamte Breite des Auslassendes 112 in den mit gleicher Breite ausgeführten Zentralkanal 10 ein. Die über die Koextrusionskanäle 11 herangeführten Schmelzeströme S2.1 und S2.2 schließen den zuvor im Zentralkanal 10 geförderten Schmelzestrom S1 beidseits ein, so dass sich der in der Figur 2 ersichtliche Schichtenverbund ergibt, welcher sodann den Zentralkanal 10 über das auslassseitige Ende 101 an ein hier nicht dargestelltes angeschlossenes Werkzeug zur Herstellung eines Koextrusionsverbundes verlässt. Dementsprechend ist der Zentralkanal 10 im Zuführungsbereich der beiden Koextrusionskanäle 11 stufenförmig erweitert, um genügend Platz für die zugeführten Schmelzströme aufzuweisen.

Um Schwankungen im Massendurchsatz der Schmelzeströme S1, S2 sowie gegebenenfalls vorhandene unterschiedliche rheologische Eigenschaften der einzelnen Kunststoffe auszugleichen, sind jedem Auslassende 112 der Koextrusionskanäle 11 zugeordnet Verstellelemente 6 vorgesehen, die in Breitenerstreckung des Auslassendes 112 und des mit gleicher Breite ausgebildeten Zentralkanals 10 nebeneinander angeordnet sind, wie insbesondere aus der Aufsicht gemäß Figur 4 ersichtlich ist. Im dargestellten Ausführungsbeispiel sind insgesamt drei Verstellelemente 6 nebeneinander bzw. in der Darstellung gemäß Figur 3 hintereinander angeordnet, um die gesamte Breite des Auslassendes 112 der Koextrusionskanäle 11 und die gesamte Breite des Zentralkanals 10 zu überdecken.

Jedes Verstellelement 6 umfasst hierbei an seinem dem Auslassende 112 zugewandten Ende einen spitz zulaufenden keilförmigen Justierabschnitt 60, der sich in Strömungsrichtung durch den Zentralkanal 10 betrachtet verjüngt und dessen eine Keilfläche 60a dem Zentralkanal 10 und dessen andere Keilfläche 60b dem Auslassende 112 des Koextrusionskanals 11 zugewandt ist. Demzufolge steht der Justierabschnitt 60 im Bereich seiner beiden Keilflächen 60a, 60b beidseits mit Schmelze in Kontakt, nämlich im Bereich der Keilfläche 60a mit der im Zentralkanal 10 geförderten Schmelze und im Bereich der Keilfläche 60b mit der aus dem Auslassende 112 austretenden Schmelze des Koextrusionskanals 11. Die Vereinigung der Schmelzeströme aus dem Zentralkanal 10 und dem Koextrusionskanal 11 findet an der Keilspitze des Justierabschnittes 60 statt. Zur Vermeidung einer zu starken Richtungsänderung ist hierbei das Auslassende 112 des Koextrusionskanals 11 bereits in Richtung auf die Strömungsrichtung durch den Zentralkanal 10 angeschrägt ausgebildet.

Anschließend an den Justierabschnitt 60 umfasst jedes Verstellelement 6 sodann einen zylindrisch verdickten Lagerungsabschnitt 61, mit welchem die Verstellelemente 6 in entsprechende Aufnahmen 21 in den jeweiligen Kanalteilen 2, 3 des Koextrusionsadapters 1 eingesteckt sind. Dieser zylindrisch verdickte Lagerungsabschnitt 61 ist exakt an die Aufnahmen 21 in den Kanalteilen 2, 3 angepasst, so dass ein Durchtritt von Schmelze aus dem Zentralkanal 10 und/oder dem Koextrusionskanal 11 entlang der Fuge zwischen Lagerungsabschnitt 61 und Aufnahme 21 verhindert wird, gleichzeitig jedoch eine Verschwenkbarkeit des Lagerungsabschnittes und des daran angeformten Justierabschnittes 60 um die aus der Figur 4 ersichtliche und in Breitenerstreckung der Auslassenden 112 des Koextrusionskanals 11 verlaufende Achse A gewährleistet wird. Die Mittelachse des Lagerungsabschnittes 61 bildet in diesem Falle gleichzeitig die Schwenkachse A.

Somit ist infolge der schwenkbaren Lagerung des Lagerungsabschnittes 61 innerhalb der Kanalteile 2, 3 eine Verschwenkbewegung des keilförmigen Justierabschnittes 60 gemäß Pfeil P2 um die Schwenkachse A möglich.

Dies hat zur Folge, dass je nach Verschwenkbewegung in Pfeilrichtung P2 die lichte Weite des jeweiligen von einem Justierabschnitt 60 überspannten Breitenabschnittes des Auslassendes 112 vergrößerbar oder verkleinerbar ist und entsprechend gegensätzlich sich der jeweilige Breitenabschnitt des Zentralkanals 10 in seiner lichten Weite verkleinert oder vergrößert.

Wird demgemäß durch Verschwenken des Justierabschnittes 60 in Pfeilrichtung P2 nach links gemäß Figur 3 die lichte Weite des Auslassendes 112 vergrößert, so wird gleichzeitig die lichte Weite des Zentralkanals 10 in diesem Breitenabschnitt entsprechend verengt und umgekehrt. Dies ist darauf zurückzuführen, dass die Keilflächen 60a, 60b des Justierabschnittes 60 einerseits mit dem Schmelzestrom im Zentralkanal 10 und andererseits mit dem Schmelzestrom im Koextrusionskanal 11 bzw. dessen Auslassende 112 in Kontakt stehen, so dass die entsprechende wechselweise Beeinflussung ermöglicht ist.

Für die entsprechende Verstellung bzw. Verschwenkung der Justierabschnitte 60 weist jedes Verstellelement 6 an seinem dem Justierabschnitt 60 abgewandten Ende einen Verstellhebel 63 auf, der mit einem Stellantrieb 7 in Wirkverbindung steht.

Der Stellantrieb 7 besteht aus einer außenseitig aus den Kanalteilen 2, 3 des Koextrusionsadapters 1 herausgeführten Gewindestange 71, die durch Angriff eines Drehwerkzeuges in Pfeilrichtung P1 in das jeweilige Kanalteil 2 bzw. 3 hineingeschraubt bzw. aus diesem herausgeschraubt werden kann. An ihrem dem Stellelement 6 zugewandten Ende weist die Gewindestange 71 einen Mitnehmer 70 auf, der mit dem Verstellhebel 63 verbunden ist, so dass über Betätigung der Gewindestange 71 in Pfeilrichtung P1 die gewünschte Verschwenkbewegung des Justierelementes 60 in Pfeilrichtung P2 bewirkbar ist.

Das Ein- bzw. Ausschrauben der Gewindestangen 71 wird durch eine mittels einer Konterplatte 74 und Schrauben 75 ortsfest gehaltene Gewindemutter 72 ermöglicht, durch welche die Gewindestange 71 hindurchgeschraubt wird.

Der jeweilige Verschiebeweg der Gewindestange 71 kann darüber hinaus über einen starr am Mitnehmer 70 befestigten Messbolzen 73 jederzeit unmittelbar von außen abgelesen und abgemessen werden.

Es versteht sich, dass zur Schaffung einer ausreichenden Beweglichkeit des Stellantriebes 7 und des Justierelementes 6 die beiden Kanalteile 2, 3 jeweils mit entsprechend großen Ausnehmungen 20 versehen sind, die die vorgenannten Bauteile entsprechend ihrer möglichen Bewegung aufnehmen.

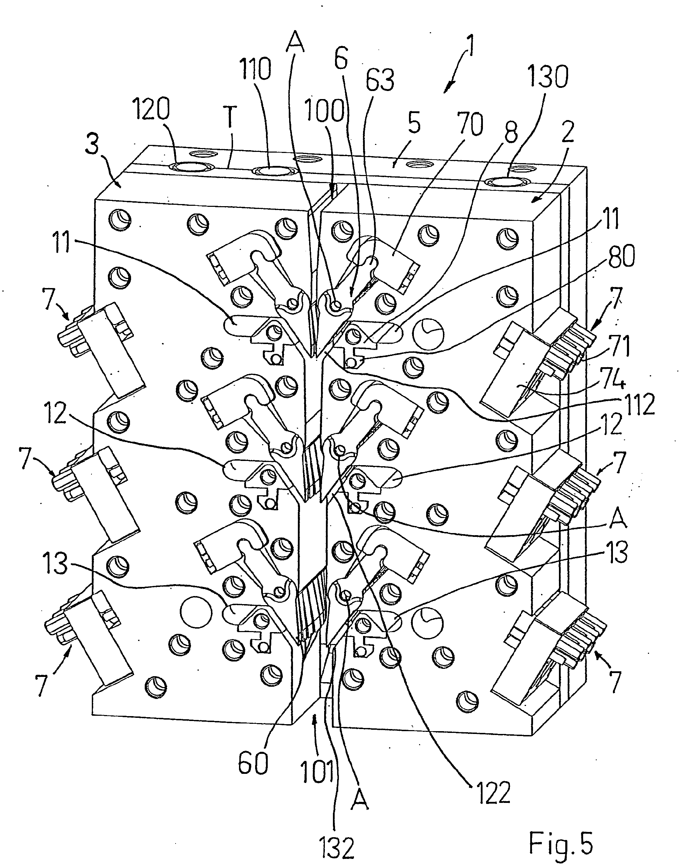

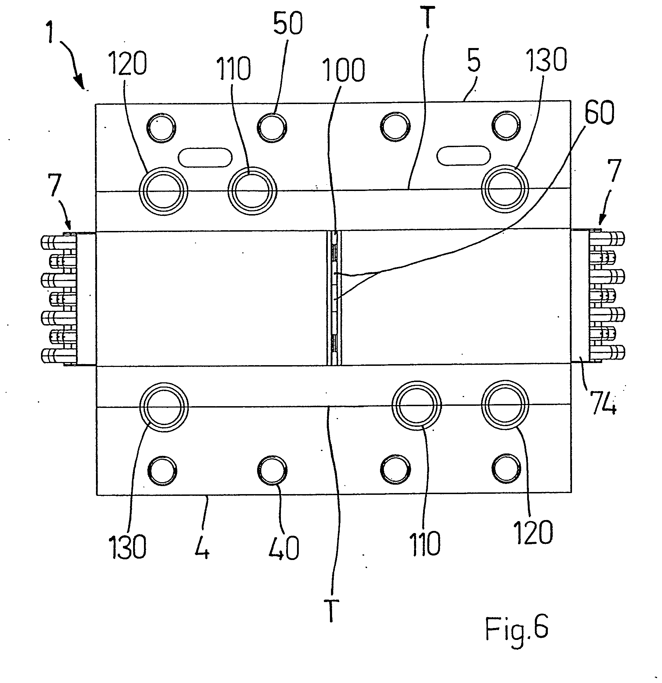

In den Figuren 5 und 6 ist eine Ausführungsform eines Koextrusionsadapters dargestellt, bei dem gleiche Teile zu dem in den Figuren 3 und 4 im Wirkprinzip dargestellten und vorangehend beschriebenen Koextrusionsadapter mit gleichen Bezugszeichen versehen sind und nachfolgend zur Vermeidung von Wiederholungen nicht nochmals gesondert beschrieben werden.

Im Gegensatz zu dem in den Figuren 3 und 4 dargestellten Koextrusionsadapter, der in jedem Kanalteil 2, 3 über lediglich einen Koextrusionskanal 11 verfügt, so dass insgesamt ein maximal dreischichtiger Koextrusionsverbund herstellbar ist, verfügt der in den Figuren 5 und 6 dargestellte Koextrusionsadapter 1 in jedem seiner Kanalteile 2, 3 über drei in Strömungsrichtung durch den Zentralkanal 10 betrachtet aufeinanderfolgend angeordnete Koextrusionskanäle 11, 12, 13 mit entsprechenden Auslassenden 112, 122, 132, so dass insgesamt ein maximal siebenschichtiger Koextrusionsverbund mit in diesem dargestellten Koextrusionsadapter 1 herstellbar ist, der jedoch durch entsprechende Variation der Koextrusionskanäle auch noch weitere oder weniger Schichten aufweisen kann.

Die Kanalteile 2, 3 sind zwischen Seitenteilen 4, 5 angeordnet, wobei in der Darstellung gemäß Figur 5 das Seitenteil 4 entfernt wurde.

Die Konfiguration und Ausgestaltung der Kanalteile 2, 3 sowie ihrer darin angeordneten Koextrusionskanäle sowie Verstellelementen und Stellantrieben ist übereinstimmend mit den Ausführungen zu Figuren 3 und 4 so gewählt, dass sie jeweils zur durch den Zentralkanal 10 verlaufenden Mittelachse M spiegelsymmetrisch ausgebildet sind, so dass deren Ausbildung stellvertretend anhand eines Koextrusionskanals erläutert werden kann.

Aus der perspektivischen Darstellung gemäß Figur 5 und auch der Aufsicht gemäß Figur 6 erkennt man, dass die jeweiligen, einem Auslassende 112, 122, 132 der Koextrusionskanäle 11, 12, 13 zugeordneten Verstellelemente 6 in unterschiedlicher Breite ausgeführt sein können, wobei die mittleren Verstellelemente 6 eine größere Breite als die äußeren Verstellelemente 6 aufweisen, was anhand der mit Bezugsziffer 60 versehenen Justierabschnitte des Koextrusionskanals 13 besonders augenscheinlich wird. Die Justierabschnitte 60 können bevorzugt eine Breite von 5-30 mm, insbesondere 10 - 25 mm aufweisen.

Im Betrieb des in den Figuren 5 und 6 dargestellten Koextrusionsadapters tritt zunächst ein Schmelzestrom S1 über das einlassseitige Ende 100 in den Zentralkanal 10 ein, woraufhin über die Koextrusionskanäle 11 in den Kanalteilen 2, 3 herangeführte Schmelzeströme außenseitig auf diesen aufgelegt werden. Nachfolgend wird auf den nunmehr dreischichtigen und in entsprechend erweiterten Abschnitt des Zentralkanals 10 weitergeführten Schmelzestrom beidseits eine weitere Außenschicht aus den Koextrusionskanälen 12 aufgelegt und weiter nachfolgend auf den nunmehr fünfschichtigen Koextrusionsverbund eine weitere Außenschicht aus den Koextrusionskanälen 13 aufgelegt, so dass insgesamt ein siebenschichtiger Koextrusionsverbund gebildet ist und über das auslassseitige Ende 101 einem nicht dargestellten Werkzeug zugeführt werden kann. Hierbei wird über die einzelnen an den Auslassenden 112, 122, 132 der Koextrusionskanäle 13 vorgesehenen Verstellelemente 6 in der bereits beschriebenen Weise eine individuelle und über die Breitenerstreckung bedarfsweise unterschiedliche Profilierung sowohl des jeweils eintretenden Schmelzestromes aus den Koextrusionskanälen 11, 12, 13 wie auch eine gleichzeitige entgegengesetzte Profilierung des sich im Zentralkanal 10 bewegenden Schmelzestromes ermöglicht.

Die jeweilige Zuführung der einzelnen Schmelzen zum einlassseitigen Ende 100 des Zentralkanals und den Koextrusionskanälen 11, 12, 13 ist insbesondere aus der Aufsicht gemäß Figur 6 ersichtlich.

Über einen dem Koextrusionsadapter 1 vorgeschalteten, hier jedoch nicht dargestellten Adapter gelangt ein erster Schmelzestrom aus einem ersten Extruder unmittelbar zum offenen einlassseitigen Ende 100 des Zentralkanals 10 und tritt dort oberseitig in den Koextrusionsadapter 1 ein.

Die den Koextrusionskanälen 11, 12, 13 in den jeweiligen Kanalteilen 2, 3 zuzuführenden Schmelzen werden jeweils über Einlassenden 110, 120, 130 in den Koextrusionsadapter 1 eingeleitet und gelangen über ein inneres Kanalsystem in einen hier nicht separat gekennzeichneten Verteilbereich, der jedoch bereits anhand der Figuren 3 und 4 erläutert worden ist, von wo aus die jeweilige Schmelze zum Auslassende 112, 122, 132 der Koextrusionskanäle 11, 12, 13 und letztlich in den Zentralkanal 10 gelangt. Zum Ausgleich von eventuell vorhandenen rheologischen Unterschieden der einzelnen Schmelzen sind jedem Auslassende 112, 122, 132 der Koextrusionskanäle 11, 12, 13 vorgelagert Stauelemente 8 vorgesehen, über welche die Schmelzen vor ihrem Eintritt in das jeweilige Auslassende 112, 122, 132 geleitet werden. Diese Stauelemente 8 können durch Wahl einer entsprechenden Kontur individuell an die jeweiligen rheologischen Eigenschaften der geförderten Kunststoffschmelze und des Massendurchsatzes angepasst werden und sind mittels angeformter Fußteile 80 in entsprechenden Einstecknuten der Kanalteile 2, 3 austauschbar gehaltert, so dass eine jeweilige individuelle Anpassung an die verarbeiteten thermoplastischen Kunststoffe erfolgen kann.

Um das vorangehend bereits erwähnte Kanalsystem ausgehend von den Einlassenden 110, 120, 130 bis zu den Auslassenden 112, 122, 132 besonders einfach fertigen zu können, sind die Einlassenden 110, 120, 130 und der fortsetzende Kanalabschnitt im Bereich der Trennfugen T zwischen den Seitenteilen 4, 5 und den Kanalteilen 2, 3 jeweils hälftig eingebracht, so dass sie bei der Herstellung der Seitenteile 4, 5 und Kanalteile 2, 3 durch Einfräsungen in der der späteren Trennfuge T zugewandten jeweiligen Oberfläche mit geringem Fertigungsaufwand hergestellt werden können. Auf diese Weise kann bei der Ausbildung der Einlassenden 110, 120, 130 und der nachfolgenden Kanalabschnitte der jeweiligen Koextrusionskanäle 11, 12, 13 auf aufwendige Verfahren, wie Erodieren verzichtet werden.

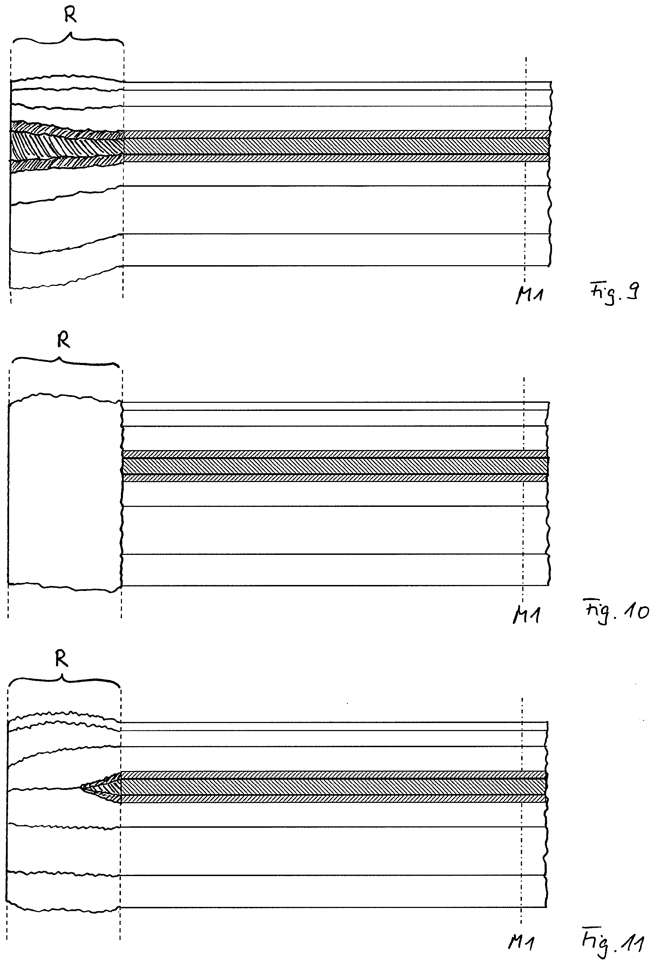

Charakteristisch für einen mittels derartiger Koextrusionsadapter hergestellten Koextrusionsverbund, etwa eine mehrschichtige koextrudierte Folie ist ein aus der Figur 9 ersichtlicher Querschnitt, bei dem durch Viskositätsschwankungen und/oder Reibungsverluste etc. die beidseits der Mittelachse M1 liegenden Randbereiche R nicht die gewünschte Dickentoleranz erreichen und insoweit für das gewünschte Endprodukt nicht brauchbar sind. Da dies technisch bislang unvermeidlich ist, werden die Randbereiche R etwa in einer Breite von 30 bis 50 mm abgeschnitten und vorzugsweise wiederverwendet, während die verbleibende Folie den Spezifikationen genügt.

Sofern jedoch einzelne Schichten, die exemplarisch im Verbund gemäß Figur 9 schraffiert dargestellt sind, nur schwierig wieder zu verwerten sind, z.B. Haftvermittlerschichten, oder aus teuren Rohstoffen, z.B. EVOH, bestehen, ist dieser Randbeschnitt mit entsprechenden Nachteilen verbunden.

Für den Fall, dass weitgehend ähnliche Eigenschaften aller Schichten vorliegen, kann z.B. eine Einkapselung mit einem geeigneten Randmaterial erfolgen, wie aus der Figur 10 ersichtlich. Solch eine Lösung ist jedoch bei großen Viskositäts- und/oder Temperaturunterschieden der einzelnen Schichten bzw. deren Rohstoffen nicht möglich.

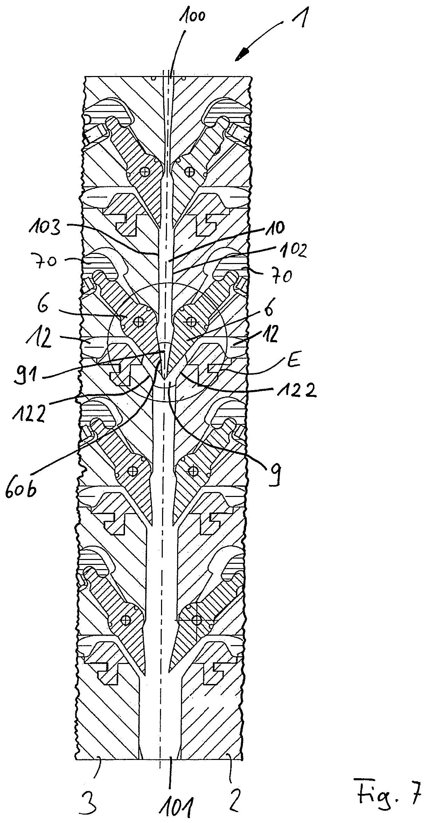

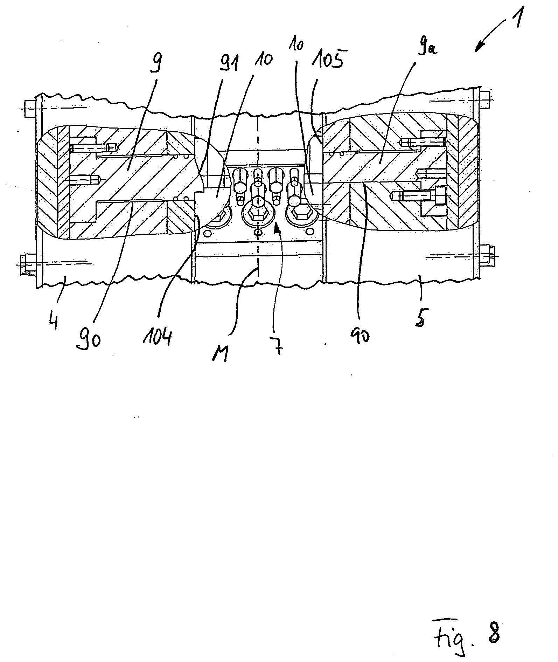

Bei dem in den Zeichnungen dargestellten Koextrusionsadapter 1 ist daher in dem mit Bezugszeichen E in Figur 7 gekennzeichneten Bereich der Einmündung eines, mehrerer oder aller Koextrusionskanäle 11, 12, 13 (hier anhand des Koextrusionskanals 12 stellvertretend beschrieben) in den Zentralkanal 10 in den Seitenwandungen 104, 105 desselben miteinander fluchtende Aufnahmebohrungen 90 benachbart zum Auslassende (122) eingebracht. In diese Aufnahmebohrungen 90 sind mittels nicht näher dargestellter Dichtungen abgedichtet Verdrängerelemente 9 in Form von Verdrängerbolzen eingesetzt, die an ihrem dem Zentralkanal 10 zugewandten Ende eine in diesen Zentralkanal um hier etwa 3 bis 5mm vorstehende Verdrängernase 91 aufweisen, siehe auch die Darstellung in Fig. 8 links von der Mittelachse M.

Die Verdrängernase 91 steigt in Strömungsrichtung des Zentralkanals 10 keilförmig an und die dem Zentralkanal 10 zugewandte Keilfläche 60a des Verstellelementes 60 ist an der Verdrängernase 91 anliegend positioniert. Durch diese in den Zentralkanal um das entsprechende Maß vorstehende Verdrängernase 91 ist es möglich, selektiv durch Auswahl der entsprechenden Aufnahmebohrung 90 und durch entsprechende Dimensionierung der Verdrängernase 91 die im Zentralkanal 10 strömende Schmelze vor dem Auflegen des aus dem entsprechenden Koextrusionskanal 10, 11, 12 stammenden Schmelzestromes vom Randbereich des Zentralkanals 10 zuverlässig mechanisch zu verdrängen, so dass der entstehende randseitige Freiraum unmittelbar von der zuströmenden Schmelze aus dem jeweiligen Koextrusionskanal eingenommen wird.

Im Ergebnis ist es damit möglich, wie auch aus der Figur 11 ersichtlich, einzelnen oder mehrere im Randbeschnitt unerwünschte Schichten unabhängig von Symmetrie und Schichtenabfolge des gesamten Koextrusionsverbundes sowie die Rheologie der einzelnen Schichten selektiv aus dem Randbereich R zu verdrängen und den Randbereich R kostengünstig und einfach wiederzuverwenden.

Selbstverständlich wird man dazu die miteinander fluchtenden Aufnahmebohrungen 90 benachbart zu einem der Koextrusionskanäle 10, 11, 12 bevorzugt mit übereinstimmend ausgeführten Verdrängerelementen 9 ausstatten, obwohl dies nicht zwingend notwendig ist. Alternativ besteht aber auch die Möglichkeit, wie in Figur 8 rechts der Mittelachse M exemplarisch dargestellt, die Aufnahmebohrung mit einem ähnlich zum Verdrängerbolzen 9 ausgeführten Verschlusselement 9a zu verschließen, das jedoch nicht in den Zentralkanal 10 vorsteht, sondern bündig mit der Seitenwand 105 abschließt. Dies ist beispielsweise dann angezeigt, wenn im Bereich der Zuführung von Schmelze aus dem entsprechenden Koextrusionskanal 10, 11, 12 in den Zentralkanal keine Verdrängung einzelner Schichten aus dem Randbereich des Zentralkanals 10 erfolgen soll.

In jedem Fall sind die Aufnahmebohrungen 90 als Durchgangsbohrungen in den Seitenplatten 4, 5 ausgeführt und durchsetzen diese, so dass es nach Abnahme nicht näher bezeichneter Abdeckungen etwa bei einem Anlagenstillstand einfach möglich ist, Verdrängerbolzen 9 und/oder Verschlusselemente 9a von außen ohne Demontage des Koextrusionsadapters auszutauschen und an veränderte Produktionsanforderungen anzupassen, etwa indem Verdrängerbolzen 9 mit anders dimensionierter Verdrängernase 91 zum Einsatz kommen oder Verdrängerbolzen 9 gegen Verschlusselemente 9a bzw. Verschlusselemente 9a gegen geeignete Verdrängerbolzen 9 ausgetauscht werden.

Darüber hinaus erkennt man in der Zeichnung gemäß Figur 6 noch weitere Bohrungen 40, 50 in den Seitenteilen 4, 5, in welchen Temperierungselemente aufgenommen werden können und/oder Adapter für die Extruder befestigt werden kann.

Es versteht sich, dass den einzelnen Einlassenden 110, 120 bzw. 130 der in beiden Kanalteilen 2, 3 ausgebildeten und spiegelsymmetrisch gegenüberliegenden Koextrusionskanälen 11, 12, 13 jeweils ein auch gemäß Figur 1 aufgeteilter und von einem Extruder stammender Schmelzestrom zugeführt werden kann, wie es auch möglich ist, jedem Einlassende 110, 120, 130 eines Koextrusionskanals 11, 12, 13 in den beiden Seitenteilen 2, 3 jeweils unterschiedliche Schmelzeströme aus separaten Extrudern zuzuführen.

Schließlich ist es noch möglich, einzelne Koextrusionskanäle 11 bei Nichtgebrauch durch entsprechendes Verschließen des Auslassendes 112, 122, 132 mittels entsprechender Bewegung der Verstellelemente 6 gegenüber dem Zentralkanal 10 sowie die benachbarten Aufnahmebohrungen 9 mittels Verschlusselementen 9a abzudichten, so dass trotz Ausbildung von hier sechs Koextrusionskanälen 11, 12, 13 für den entsprechend siebenschichtige Koextrusionsverbunde auch Koextrusionsverbunde mit einer geringeren Schichtenanzahl hergestellt werden können und die hierbei nicht benötigten Koextrusionskanäle 11 mittels der Verstellemente 6 sowie der Verschlusselemente 9a einfach verschlossen werden. Auf diese Weise werden Umrüstzeiten beim Koextrusionsadapter 1 minimiert.

## Patentansprüche

1. Koextrusionsadapter, umfassend einen Zentralkanal (10) mit einem einlassseitigen Ende (100) und einem auslassseitigen Ende (101) sowie die Höhe des Zentralkanals (10) begrenzenden Boden- und Deckenwandungen (102, 103) und die Breite des Zentralkanals (10) begrenzenden Seitenwandungen (104, 105), ferner mindestens einen Koextrusionskanal (11, 12, 13) mit Einlassende (110, 120, 130) und Auslassende (112, 122, 132), wobei das Auslassende (112, 122, 132) stromabwärts des einlassseitigen Endes (100) des Zentralkanals (10) im Bereich der Boden- und/oder Deckenwandung (102, 103) in diesen einmündet und jedem Auslassende (112, 122, 132) des mindestens einen Koextrusionskanals (11, 12, 13) zugeordnet Verstellvorrichtungen vorgesehen sind, die aus einer Mehrzahl von Verstellelementen (6) bestehen, welche sich gemeinsam über die Breite des Auslassendes (112, 122, 132) erstrecken und mittels Stellantrieben (7) unabhängig voneinander in der Weise verstellbar sind, dass die lichte Weite des jeweiligen Breitenabschnittes des Auslassendes (112, 122, 132) veränderbar ist, **dadurch gekennzeichnet, dass** benachbart zum Auslassende (112, 122, 132) mindestens eine der Seitenwandungen (104, 105) eine Aufnahmebohrung (90) aufweist, in die ein über die Seitenwandung (104, 105) in den Zentralkanal (10) vorstehendes Verdrängerelement (9) oder ein mit der Seitenwandung (104, 105) bündig abschließendes Verschlusselement (9a) eingesetzt ist.

2. Koextrusionsadapter nach Anspruch 1, **dadurch gekennzeichnet, dass** das Verdrängerelement (9) als Verdrängerbolzen mit einer in den Zentralkanal (10) vorstehenden angeformten Verdrängernase (91) ausgebildet ist.

3. Koextrusionsadapter nach Anspruch 1 oder 2, **dadurch gekennzeichnet, dass** die Aufnahmebohrung (90) die Seitenwandung (104, 105) durchsetzt und das Verdrängerelement (9) oder das Verschlusselement (9a) von außen und abdichtend in die Aufnahmebohrung (90) eingesetzt ist.

4. Koextrusionsadapter nach einem der Ansprüche 1 bis 3, **dadurch gekennzeichnet, dass** beide Seitenwandungen (104, 105) mit zueinander fluchtend ausgerichteten Aufnahmebohrungen (90) ausgebildet sind.

5. Koextrusionsadapter nach einem der Ansprüche 1 bis 4, **dadurch gekennzeichnet, dass** die Verstellelemente (6) an ihrem dem Auslassende (112, 122, 132) zugewandten Ende einen keilförmigen Justierabschnitt (60) aufweisen, dessen eine Keilfläche (60a) dem Zentralkanal (10) und dessen andere Keilfläche (60b) dem Auslassende (112, 122, 132) des Koextrusionskanals (11, 12, 13) zugewandt ist und die dem Zentralkanal (10) zugewandte Keilfläche (60a) an dem vorstehenden Verdrängerelement (9) anlegbar ist.

## Claims

1. Coextrusion adapter, comprising a central channel (10) with an inlet-side end (100) and an outlet-side end (101) as well as floor and ceiling walls (102, 103) delimiting the height of the central channel (10) and side walls (104, 105) delimiting the width of the central channel (10), furthermore at least one coextrusion channel (11, 12, 13) with inlet end (110, 120, 130) and outlet end (112, 122, 132), wherein the outlet end (112, 122, 132) opens out into the central channel (10) downstream of its inlet-side end (100) in the region of the floor and/or ceiling wall (102, 103) and adjusting devices are provided, assigned to each outlet end (112, 122, 132) of the at least one coextrusion channel (11, 12,13), which consist of a plurality of adjusting elements (6) which extend together across the width of the outlet end (112, 122, 132) and are adjustable by means of actuating drives (7) independently of one another such that the clear width of the respective width portion of the outlet end (112, 122, 132) is variable, **characterised in that** adjacent to the outlet end (112,122,132) at least one of the side walls (104, 105) has a receiving bore (90) into which a displacing element (9) protruding over the side wall (104, 105) into the central channel (10) or a closure element (9a) finishing flush with the side wall (104, 105) is inserted.

2. Coextrusion adapter according to claim 1, **characterised in that** the displacing element (9) is in the form of a displacing bolt with a displacing nose (91) formed protruding into the central channel (10).

3. Coextrusion adapter according to claim 1 or 2, **characterised in that** the receiving bore (90) penetrates through the side wall (104, 105) and the displacing element (9) or the closure element (9a) is set into the receiving bore (90) from the outside and in a sealing manner.

4. Coextrusion adapter according to any of claims 1 to 3, **characterised in that** both side walls (104, 105) are formed with receiving bores (90) aligned flush with one another.

5. Coextrusion adapter according to any of claims 1 to 4, **characterised in that** the adjusting elements (6) have at their end facing the outlet end (112, 122, 132) a wedge-shaped calibration portion (60), the one wedge surface (60a) of which faces the central channel (10) and the other wedge surface (60b) of which faces the outlet end (112, 122, 132) of the coextrusion channel (11,12, 13) and the wedge surface (60a) facing the central channel (10) can be laid on the protruding displacing element (9).

## Revendications

1. Adaptateur de coextrusion, comprenant un canal central (10) avec une extrémité côté entrée (100) et une extrémité côté sortie (101) ainsi que des parois de sol et de plafond (102, 103) délimitant la hauteur du canal central (10) et des parois latérales (104, 105) délimitant la largeur du canal central (10), en outre au moins un canal de coextrusion (11, 12, 13) ayant une extrémité d'entrée (110, 120, 130) et une extrémité de sortie (112, 122, 132), dans lequel l'extrémité de sortie (112, 122, 132) débouche dans le canal central (10) en aval de l'extrémité côté entrée (100) de celui-ci dans la zone de la paroi de sol et/ou de plafond (102, 103), et des dispositifs de réglage sont prévus associés à chaque extrémité de sortie (112, 122, 132) de l'au moins un canal de coextrusion (11, 12, 13), qui consistent en une pluralité d'éléments de réglage (6), lesquels s'étendent ensemble sur la largeur de l'extrémité de sortie (112, 122, 132) et peuvent être réglés indépendamment les uns des autres au moyen d'actionneurs (7) de sorte que la largeur libre de la section de largeur respective de l'extrémité de sortie (112, 122, 132) puisse être modifiée, **caractérisé en ce qu'**au moins une des parois latérales (104, 105) présente, à proximité de l'extrémité de sortie (112, 122, 132), un alésage de réception (90) dans lequel est introduit un élément de déplacement (9) en saillie dans la paroi latérale (104, 105) dans le canal central (10) ou un élément de fermeture (9a) se fermant à fleur de la paroi latérale (104, 105).

2. Adaptateur de coextrusion selon la revendication 1, **caractérisé en ce que** l'élément de déplacement (9) est réalisé en tant que boulon de déplacement avec un nez de déplacement (91) formé en saillie dans le canal central (10).

3. Adaptateur de coextrusion selon la revendication 1 ou 2, **caractérisé en ce que** l'alésage de réception (90) traverse la paroi latérale (104, 105) et l'élément de déplacement (9) ou l'élément de fermeture (9a) est introduit dans l'alésage de réception (90) de l'extérieur et de manière étanche.

4. Adaptateur de coextrusion selon l'une quelconque des revendications 1 à 3, **caractérisé en ce que** les deux parois latérales (104, 105) sont réalisées avec des alésages de réception (90) orientés de manière alignée l'un par rapport à l'autre.

5. Adaptateur de coextrusion selon l'une quelconque des revendications 1 à 4, **caractérisé en ce que** les éléments de réglage (6) présentent une section d'ajustement (60) en forme de coin à leur extrémité orientée vers l'extrémité de sortie (112, 122, 132), dont une surface en coin (60a) est orientée vers le canal central (10) et dont l'autre surface en coin (60b) est orientée vers l'extrémité de sortie (112, 122, 132) du canal de coextrusion (11, 12, 13), et la surface en coin (60a) orientée vers le canal central (10) peut être placée contre l'élément de déplacement (9) en saillie.
